# EUROPEAN PATENT APPLICATION

(11) **EP 1 975 431 A1**
(43) Date of publication of application: **01.10.2008**
(21) Application number: 06834763.2
(22) Date of filing: 15.12.2006
(51) Int. Cl.: F16C 32/06

(54) **HYDROSTATIC SLIDER**

(30) Priority: 15.12.2005 JP 2005362396
(71) Applicant: Kyocera Corporation, Kyoto-shi Kyoto 612-8501 (JP)
(72) Inventor: MUNEISHI, Takeshi, Higashiomi-shi Shiga 527-8555 (JP)
(74) Representative: HOFFMANN EITLE
(86) International application number: PCT/JP2006/325020
(87) International publication number: WO 2007/069713

(57) **Abstract**

A static pressure slider 1 includes a stationary member 2, a movable member 3, and a measuring means for measuring an actual distance between the stationary member 2 and the movable member 3. Preferably, the measuring means includes conductor layers 21-24, 31A-34A respectively formed on the stationary member 2 and the movable member 3. The measuring means may serve to measure a capacitance between guiding surfaces 25-28 and surfaces facing thereto.

## Description

### TECHNICAL FIELD

The present invention relates to a static pressure slider including a stationary member and a movable member movable relative to the stationary member, with a static pressure fluid layer formed of pressurized fluid provided between the stationary member and the movable member. Specifically, the present invention relates to a static pressure slider suitable for transferring works in a vacuum chamber.

### BACKGROUND ART

In a semiconductor manufacturing apparatus, a transferring device called "stage" is used for transferring works such as wafers and masks. Such stage includes a guide for guiding the movable member in a predetermined direction. Examples of the guide are a sliding guide, a rolling guide using a plurality of rollers or balls, and a static pressure guide using static pressure fluid. The structure of the guide determines the movement accuracy of the movable member of the stage, or the guiding accuracy (e.g. posture accuracy, straightness accuracy) of the stage. In view of the guiding accuracy of the stage, the static pressure guide is considered to have a superiority, and thus stages utilizing static pressure guides are widely used.

Such stage with such static pressure guide is called "static pressure slider", and includes a stationary member composing a guide and a movable member on which works are placed. In the static pressure slider, a fluid layer is formed by supplying a pressurized fluid between the stationary member and the movable member. The fluid layer serves to move the movable member in a predetermined direction without contacting the stationary member. In the static pressure slider, the fluid layer functions as a bearing, and generally has a thickness of 5-10µm by supplying a pressurized fluid under a pressure of 3-5 atmospheres.

By utilizing the fluid layer as a bearing for guiding the movable member without contact, the static pressure slider is less likely to be affected by flatness or straightness of the stationary member, differently from the stages utilizing other guides (e.g. sliding guide, rolling guide) of contact type. Thus, the static pressure slider shows an excellent guiding accuracy in comparison with other stages utilizing guides of contact type. Further, by reducing the thickness of the fluid layer, the posture of the movable member is further stabilized in the static pressure slider, thereby enhancing the guiding accuracy of the stage.

Meanwhile, the semiconductor manufacturing process includes various steps and various devices are used in the steps. The stage as one of the devices is used within a chamber (vacuum chamber) under vacuum or a reduced-pressure atmosphere. Example of the devices used in such vacuum chamber include devices for processing and checking the works by charged particles such as electron beam and ion beam, or by electromagnetic radiation of shorter wavelength such as X-ray: a scanning electron microscope (SEM); an electron beam (EB) recorder; a focus ion beam (FIB) recorder; and an X-ray exposure device.

As described above, in the static pressure slider, a highly pressurized (under 3-5 atmospheres, for example) fluid layer is provided between the stationary member and the movable member. When the static pressure slider is used as a stage in a vacuum chamber, it is necessary to prevent the fluid from leaking into the vacuum chamber. Such static pressure slider is called as "vacuum air slider", as shown in Fig. 14, for example (refer to Patent document 1 listed below).

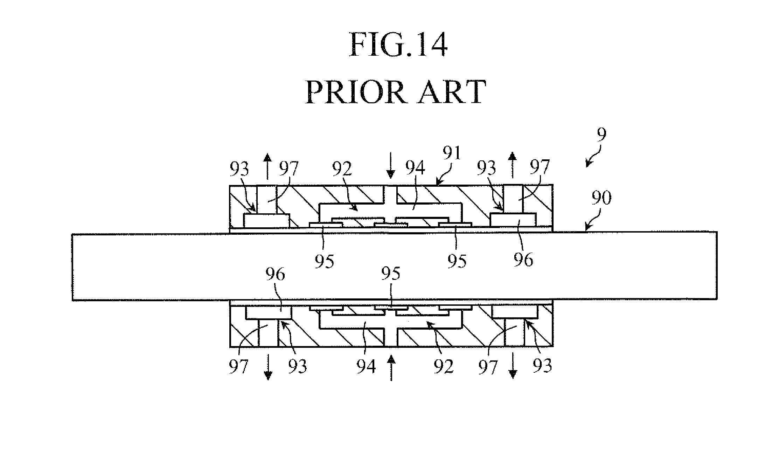

The vacuum air slider 9 shown in Fig. 14 includes a stationary member 90 and a movable member 91, and a fluid is supplied and discharged at the movable member 91. The movable member 91 includes a supply means 92 for supplying a pressurized fluid between the movable member and the stationary member 90, and a discharge means 93 for discharging the fluid. The supply means 92 serves to form a fluid layer with a thickness of about 5-10µm between the stationary member 90 and a movable member 91, and includes a supply path 94 and a throttle 95. The throttle 95 serves to control the amount of supplied fluid, and is provided as an orifice throttle, a surface throttle, or a porous throttle. The discharge means 93 includes a discharge port 96 and a discharge path 97, and is connected to a non-illustrated pump to discharge the fluid.

As described above, in a static pressure slider such as the vacuum air slider 9, by reducing the thickness of the fluid layer, the posture of the movable member 9 is stabilized, thereby enhancing the guiding accuracy. However, in the vacuum air slider 9, there is a limit to have a relatively high flatness at the stationary member 90 and the movable member 91, and deformation due to own weight of the stationary member 90 is generated. Therefore, if the thickness of the fluid layer is unduly reduced, when the movable member 91 moves, the movable member 91 may get into contact with the stationary member 90, so that "sizing" is generated. In order to prevent such disadvantage, the fluid layer needs a thickness of not less than a predetermined value, and in the vacuum air slider 9, the thickness of the fluid layer has been limited to not less than about 8µm.

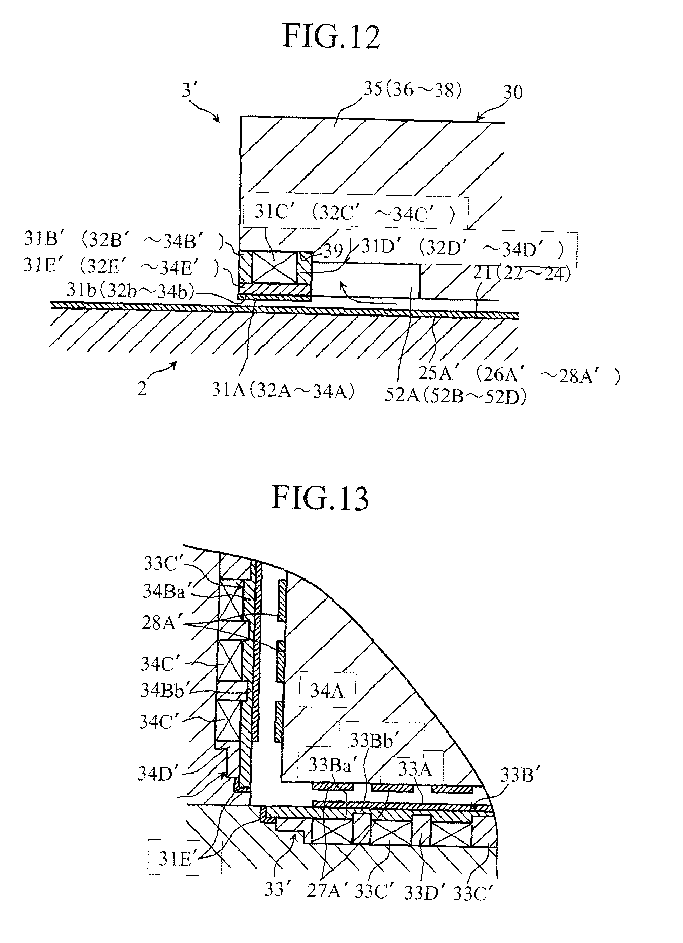

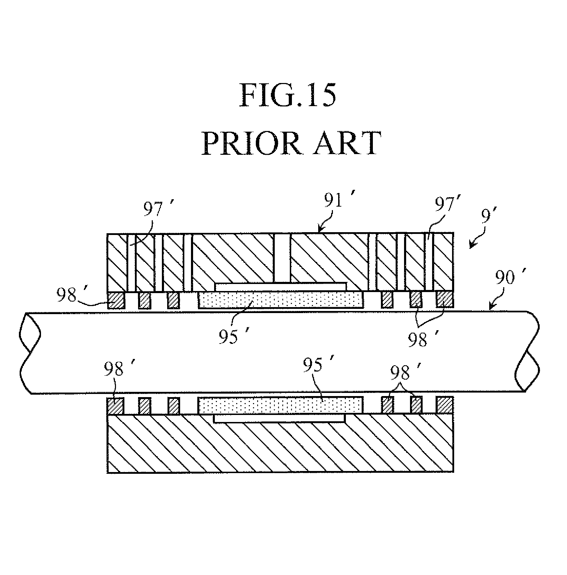

Then, for preventing "seizing", a vacuum air slider 9' as shown in Fig. 15 was proposed (refer to Patent document 2 listed below). The illustrated air slider 9' has a structure similar to the vacuum air slider 9 shown in Fig. 13, and includes a stationary member (guiding bar) 90' and a movable member 91'. In the vacuum air slider 9', the movable member 91' includes a labyrinth bulkhead 98' and a throttle (porous pad) 95', both form of an abrasion-resistant porous material. With such structure, metal parts of the stationary member 90' and the movable member 91' are prevented from contacting each other, and thus "seizing" is prevented. In the vacuum air slider 9', the thickness of the fluid layer is set to about 5µm, so that the posture of the movable member 91' is stabilized to enhance the guiding accuracy.

In the vacuum air slider 9' shown in Fig. 15, the thickness of the fluid layer is smaller than that of the vacuum slider 9 shown in Fig 14. However, the thickness of the fluid layer, or the distance between the stationary member 90' and the movable member 91', which is only 5µm, most affects the amount of the fluid leaking into the vacuum chamber. In order to prevent the pressurized fluid from leaking out of the vacuum air slider 9', a vacuum pump of the vacuum chamber, or a vacuum pump connected to a discharge path 97' of the movable member 91' needs to be driven with a relatively large exhaust velocity. Further, the amount of the pressurized fluid supplied to the vacuum air slider 9' is still large, which increases the running cost of an apparatus using the vacuum air slider 9'.

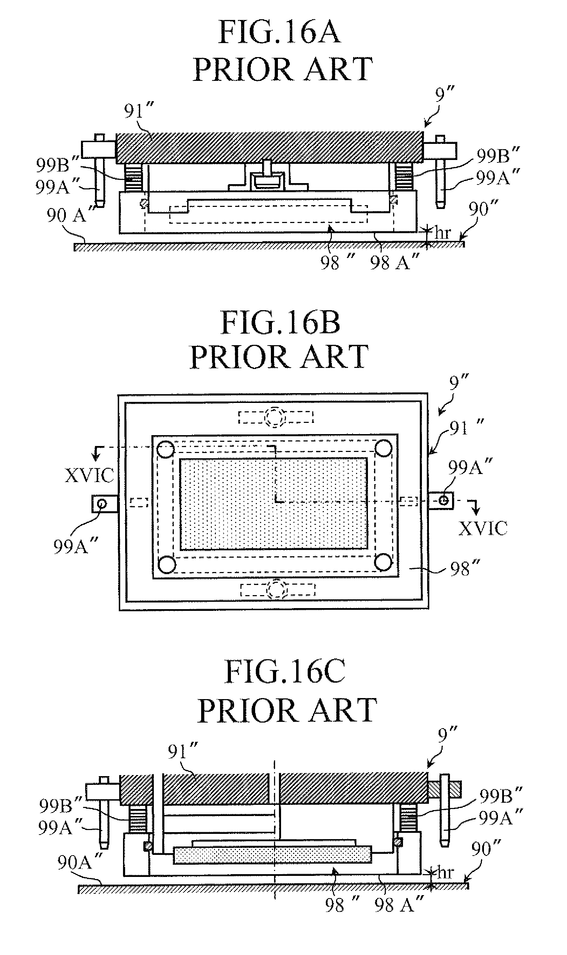

As shown in Figs. 16A-16C, the vacuum air slider may further include a sensor 99A" for detecting the distance between a labyrinth member 98" supported to a movable member 91" and a guiding surface 90A" of a stationary member 90", and may also include a distance adjusting mechanism for adjusting the distance, based on the detecting result (refer to Patent document 3 listed below). An example of the sensor 99A" includes a non-contact displacement gauge such as a capacitance type displacement gauge, an eddy current displacement gauge, and an optical displacement gauge. The distance adjusting mechanism includes an actuator 99B" such as a piezoelectric element, a super-magnetostrictive element, and an electromagnet, for moving the labyrinth member 98".

Patent Document 1: USP 4,749,283
Patent Document 2: JP-A-2-212624
Patent Document 3: JP-A-2002-3495569

### DISCLOSURE OF THE INTENTION

In the vacuum air slider 9" illustrated in Figs. 16A-16C, the sensor 99A" is supported to the movable member 91" at the side of the movable member 91", and detects the displacement amount of the labyrinth member 98". In the other words, the sensor of the vacuum air slider 9" detects, at a position apart from the labyrinth member 98", the distance between the guiding surface 90A" of the stationary member 90" and an end surface 98A" of the labyrinth member 98" facing the guiding surface 90A". With such structure of the vacuum air slider 9", the actual distance "hr" between the guiding surface 90A" and the labyrinth member 98" is not measured, but the displacement amount of the labyrinth member 98" relative to the guiding surface 90A" is detected at a position apart from the labyrinth member 98", which prevents an accurate measurement. As a result, when the labyrinth member 98" contacts the guiding surface 90A", the fact is not detected immediately, so that "seizing" is still likely to be generated.

An object of the present invention is to provide a static pressure slider, in which "seizing" at the stationary member caused by the contact of the movable member, as well as leaking of the pressurized fluid from the static pressure slider are prevented. Another object of the present invention is to enhance the posture stability of the movable member by reducing the thickness of the fluid layer, thereby reducing the supply amount of pressurized fluid, and thus reducing the running cost.

According to the present invention, there is provided a static pressure slider comprising a stationary member including a guiding surface and a movable member movable relative to the stationary member along the guiding surface, wherein a static pressure fluid layer formed of a pressurized fluid is provided between the stationary member and the guide surface, wherein the static pressure slider further comprises a measuring means for measuring an actual distance between the guiding surface and an end surface of the movable member facing the guiding surface.
The measuring means serves to measure a capacitance between the guiding surface and the end surface. The measuring means comprises a first conductor layer formed on the guiding surface and a second conductor layer formed on the end surface, the first and second conductor layers being used to measure the capacitance therebetween.
Preferably, each of the first and second conductor layers has a smooth surface with the maximum height Rz of not more than 1µm. The first and second conductor layers are made of a metal or a single crystal . The first and second conductor layers are formed into thick layers using a metal . The first and second conductor layers have a thickness of not less than 0.1µm and not more than 0.1mm. The first and second conductor layers are made of a non-magnetic material.
The movable member comprises a body and a displacement portion, the displacement portion being displaceable relative to the body in a direction perpendicular to the moving direction of the movable member, the displacement portion having an end surface which serves as said end surface of the movable member, wherein the static pressure slider further comprises a controlling means for controlling the position of the displacement portion, so that the distance between the guiding surface and the end surface is changed, based on the measurement result of the measuring means.
The body comprises a discharge channel for discharging the pressurized fluid outside, at an end portion adjacent to the discharge channel, the displacement portion being positioned.
The movable member further comprises a piezoelectric element for moving the displacement portion, the piezoelectric element being controlled to expand and contract by the controlling means.
The displacement portion is supported to the body, while being applied in a direction apart from the guiding surface. The static pressure slider may further comprise a sealing member for sealing a gap between the body and the displacement portion.
The displacement portion is provided with a plurality of piezoelectric elements aligned in a direction perpendicular to the moving direction of the movable member. The displacement portion comprises an elastically deformable member, the piezoelectric elements being fixed to the deformable member.
The deformable member comprises a plurality of thick portions to which the piezoelectric elements are fixed, and a plurality of thin portions positioned between the adjacent thick portions.
Preferably, the displacement portion further comprises a protect resin member surrounding the piezoelectric elements.
Preferably, at least one of the first and second conductor layers includes a plurality of individual electrodes corresponding to respective ones of the piezoelectric elements.

In the static pressure slider according to the present invention, while the movable member moves relative to the stationary member, the actual distance between the guiding surface and the end surface is measured by the measuring means, so that the distance between the stationary member and the movable member is accurately measured. Thus, by the static pressure slider according to the present invention, the measurement accuracy of the distance between the stationary member and the movable member is remarkably improved, comparing with, for example, the method in which the distance between the stationary member and the movable member is calculated based on a measurement result obtained, using the displacement sensor, by measuring the distance at a portion other than the portion between the guiding surface and the end surface.

By displacing the movable member (the displacement portion) according to the accurately measured distance, the distance between the stationary member and the movable member is properly maintained, thereby preventing the movable member from getting too close to the stationary member. Since the movable member is prevented from getting into contact with the stationary member, "seizing" due to the contact of the movable member to the stationary member is also prevented, and thus protecting the stationary member and the movable member from damage. Especially, by urging the displacement portion in the direction away from the stationary member, the displacement portion can be responsively retracted from the stationary member, using the actuator for displacing the displacement portion. Therefore, in the static pressure slider according to the present invention, "seizing" can be prevented even if the distance between the stationary member and the movable member is set to a relatively small value, and thus the thickness of the fluid layer provided between the stationary member and the movable member can be reduced.

As a result, in the static pressure slider according to the present invention, the posture accuracy of the movable member relative to the stationary member is enhanced, and the distance between the stationary member and the movable member is constantly kept to be relatively small, thereby reducing the amount of the pressurized fluid to be supplied between the stationary member and the movable member. Even if the movable member gets into contact with the stationary member, since the capacitance immediately drops to zero, according to the capacitance measured by the measuring means, the contact of the movable member to the stationary member is immediately detected, so that the problem due to the contact is held to the minimum. Further, since the displacement portion is applied in the direction apart from the stationary member, the displacement portion are responsively retracted from the stationary member, and the problem due to the contact is held to the minimum.

Since the distance between the stationary member and the movable member is constantly kept to be relatively small, the pressurized fluid provided between the stationary member and the movable member is prevented from leaking outside. Thus, the vacuum pump for discharging the pressurized fluid from the static pressure slider is driven by a relatively low exhaust velocity and electrical power. As a result, the cost for discharging the pressurized fluid can be reduced. Further, by preventing the pressurized fluid from leaking out of the static pressure slider, the loss of vacuum in the vacuum chamber (not shown) is prevented, thereby reducing the exhaust velocity and electrical power necessary for maintaining the degree of vacuum in the vacuum chamber. Thus, the running cost of the static pressure slider is reduced also in this point.

By forming the first conductor layer and the second conductor layer of the measuring means to have smooth surfaces, comparing to the case in which the first conductor layer and the second conductor layer have rough surfaces, the second conductor layer is more likely to be prevented from contacting the first conductor layer, or the movable member is more likely to be prevented from contacting the stationary member. Further, since the holes on the surfaces of the stationary member and the movable member are reduced and thus the capacitance between the first conductor layer and the second conductor layer is accurately measured, while preventing the pressurized fluid from leaking outside. As a result, the distance between the stationary member and the movable member for preventing "seizing" is set to be relatively small, and thus the thickness of the fluid layer between the stationary member and the movable member is set to be relatively small.

Further, by forming the first conductor layer and the second conductor layer to be non-magnetic, when the static pressure slider according to the present invention is used in devices utilizing charged particles such as an scanning electron microscope (SEM), an electron beam (EB) recorder, and a focus ion beam (FIB) recorder, such devices is prevented from adverse effect of the first conductor layer and the second conductor layer. In this way, the static pressure slider according to the present invention can be used without problem in the devices utilizing charged particles.

Still further, by providing the sealing member between the movable body and the displacement portion, the pressurized fluid for forming the fluid layer is prevented from leaking from between the body and the displacement portion. Especially when the displacement portion is displaced relative to the body, it is advantageous to prevent the leaking of the pressurized fluid by the sealing member.

When the displacement portion are provided with a plurality of piezoelectric elements, the distance between the stationary member and the movable member is adjusted by individual expansion and contraction of the piezoelectric elements. Further, when the piezoelectric elements are fixed to an elastically deformable member, the deformable member is deformed by expanding and contracting the piezoelectric, so that the distance between the displacement portion (the movable member) and the stationary member is delicately adjusted.

### BRIEF DESCRIPTION OF THE DRAWINGS

Fig. 1 is an overall perspective view illustrating a vacuum air slider according to a first embodiment of the present invention.
Fig. 2 is a sectional view taken along lines II-II of Fig. 1.
Fig. 3 is a sectional view taken along lines III-III of Fig. 1.
Fig.4 is a partly exploded perspective view of a movable member of the vacuum air slider in Fig. 1.
Fig. 5 is a sectional view taken along lines V-V of Fig. 4.
Fig. 6 is a sectional view taken along lines VI-VI of Fig. 3.
Fig. 7 is a sectional view taken along lines VII-VII of Fig. 3.
Fig. 8 is a sectional view enlarging the principal portions of Fig. 6.
Fig. 9 is a block diagram of the vacuum air slider of Fig. 1.
Fig. 10 is an overall perspective view illustrating a vacuum air slider according to a second embodiment of the present invention.
Fig. 11 is a sectional view taken along lines XI-XI of Fig. 10.
Fig. 12 is a sectional view taken along lines XII-XII of Fig. 11.
Fig. 13 is a sectional view enlarging the principal portions of Fig. 11.
Fig. 14 is a sectional view illustrating an example of a conventional static pressure slider.
Fig. 15 is a sectional view illustrating another example of a conventional static pressure slider.
Fig. 16A is a sectional view illustrating still another example of a conventional static pressure slider, Fig. 16B is a bottom view of Fig. 16A, and Fig 16C is a sectional view taken along lines XVIC-XVIC of Fig 16B.

### Legends

1, 1' vacuum air slider (static pressure slider)
2 stationary member
21-24 guiding surface
25-28, 25'-28' first conductor layer (of stationary member)
25A'-28A' individual electrode
3, 3 movable member
30 body (movable body)
31-34, 31'-34' displacement portion
31B'-34B' deformable member (of displacement portion)
31Ba'-34Ba' thick portion (of deformable member)
31Bb'-34Bb' thin portion (of deformable member)
31C'-34C' piezoelectric element (of displacement portion)
31D'-34D' protect resin member (of displacement portion)
31A-34A second conductor layer (of displacement portion)
31b-34b bottom end surface (of displacement portion)
61 piezoelectric element
63 packing (sealing member)
70 measuring means
72 controlling means

First and second embodiments of a static pressure slider according to the present invention will be described with reference to the drawings, by taking a vacuum air slider as an example.

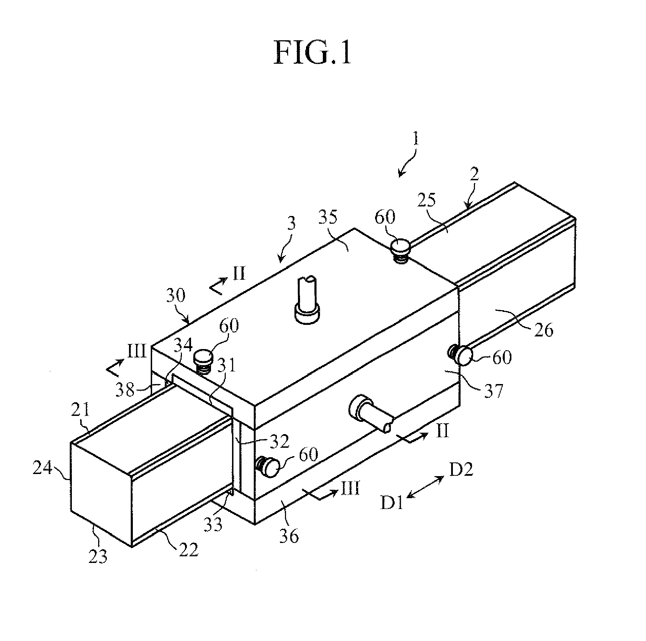

First, a vacuum air slider according to a first embodiment of the present invention will be described with reference to Figs. 1-9.

The vacuum air slider 1 shown in Fig. 1, as an example of a static pressure slider according to the present invention, is used for transferring works in a vacuum chamber. The vacuum air slider 1 includes a stationary member 2 and a movable member 3. The movable member 3 moves relative to the stationary member 2 in directions D1, D2, with a fluid layer formed by a pressurized fluid the members.

As shown in Figs. 1-3, the stationary member 2 serves to movement of the movable member 3, and is formed into a rectangular column with four guiding surfaces 21, 22, 23, 24. The stationary member 2 is made of a ceramics material mainly containing alumina or silicon carbide, for example.

The guiding surfaces 21-24 define the movement path of the movable member 3. Each of the guiding surfaces 21-24 extends in the directions D1, D2 of Fig. 1 and is formed into a smooth surface, for example. The guiding surfaces 21-24 are provided with first conductor layers 25, 26, 27, 28, respectively. As will be specifically described below, the first conductor layers 25-28 are used for measuring a distance between end surfaces of the movable member 3 (or displacement portion 31-35 which are to be described below) and the stationary member 2, and are formed into a strip-shape extending in the axial direction of the stationary member 2 to cover the whole area of the guiding surfaces 21-24.

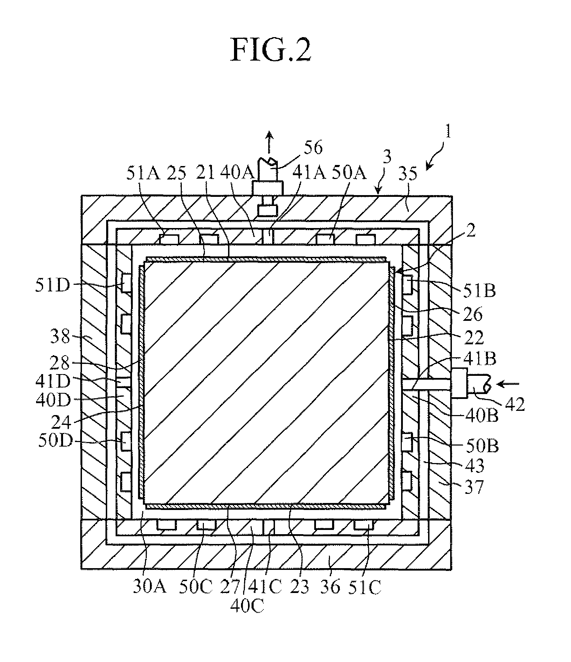

As shown in Fig. 1, the movable member 3 moves along the guiding surfaces 21-24 of the stationary member 2 in the directions D1, D2, while surrounding the stationary member 2, and as shown in Figs. 2-4, includes a body 30 and displacement portion 31, 32, 33, 34.

The body 30 includes four boards 35, 36, 37, 38, and by connecting these boards 35-38, is formed into a tube having a hollow 30A with rectangular section, so as to surround the stationary member 2.

Each of the boards 35-38 is rectangular as seen in plan view. The boards 35, 36 are horizontally positioned and have a relatively large size, while the boards 37, 38 are vertically positioned and have a relative small size. The boards 35-38 respectively include air pads 40A, 40B, 40C, 40D, circular discharge channels 50A, 50B, 50C, 50D, 51A, 51B, 51C, 51D, and linear discharge channels 52A, 52B, 52C, 52D, and similarly to the stationary member 2, are made of a ceramics material mainly containing alumina or silicon carbide, for example. Preferably, the surfaces of the boards 35-38 to be connected to each other are provided with vacuum grease, so that a fluid is prevented from leaking from the connected surfaces.

The air pads 40A-40D serve as throttles for controlling the feed rate of a supplied fluid and are provided as orifice throttles, surface throttles, or porous throttles. As well shown in Fig. 2, the air pads 40A-40D respectively include supply tubes 41A, 41B, 41C, 41D. These supply tubes 41A-41D are connected to a circular supply passage 43 which is connected to a supply pipe 42 provided at the vertical board 37. With such structure, a pressurized fluid is supplied from the air pads 40A-40D, through the supply pipe 42, the circular supply passage 43, and the supply tubes 41A-41D.

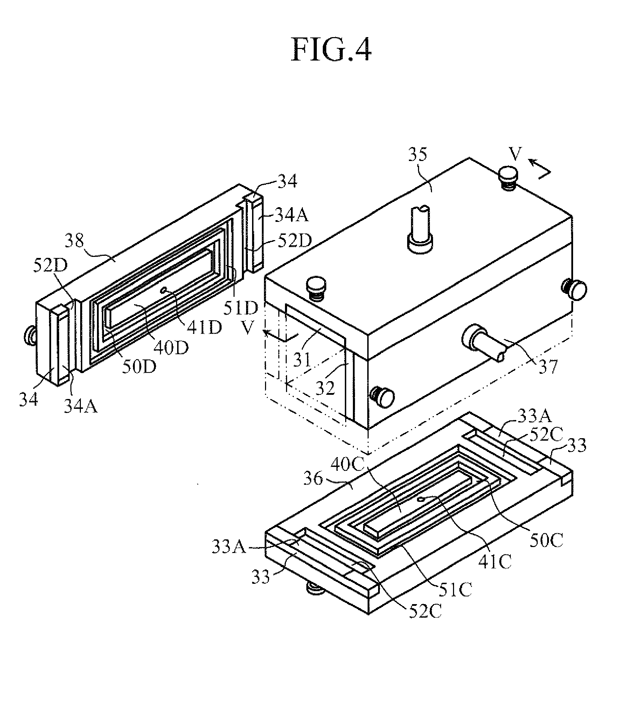

The circular discharge channels 50A-50D, 51A-51D serve to collect the pressurized fluid supplied from the air pads 40A-40D, and as may be seen from Figs. 2 and 4, are formed to surround the air pads 40A-40D. These circular discharge channels 50A-50D, 51A-51D, though not shown, are connected to the outside of a vacuum chamber (not shown) through a discharge pipe, so that the pressurized fluid is discharged out of the vacuum chamber.

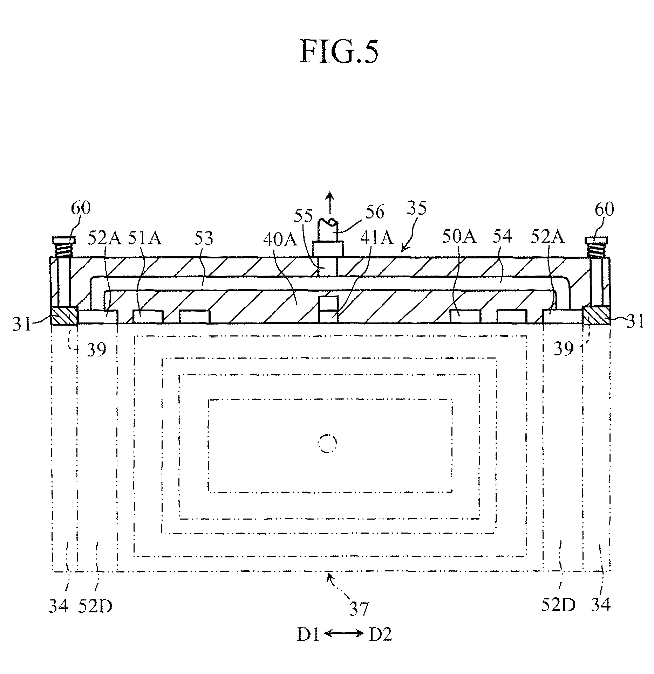

As may be seen from Figs. 4 and 5, the linear discharge channels 52A-52D are connected to each other by connecting the boards 35-38, and serve as a circular discharge channel of the body 30 as a whole. As well shown in Fig. 4, these linear discharge channels 52A-52D are provided at the both ends of the boards 35-38 in the longitudinal directions D1, D2, and extend in the width direction of the boards. The linear discharge channels 52B, 52D of the vertical boards 37, 38 are formed up to the side edges of the boards, and are open in its width direction. On the other hand, the linear discharge channels 52A, 52C of the horizontal boards 35, 36 are formed at portions except the side edges of the boards, and are closed in its width direction. As shown in Fig. 5, the linear discharge channel 52A of the horizontal board 35 is connected to discharge passages 53, 54. These discharge passages 53, 54 are connected to a vacuum pump (not shown) provided outside of the vacuum chamber, via a common discharge passage 55 and a discharge pipe 56. With such structure, by deriving the vacuum pump, the pressurized fluid is discharge out of the vacuum chamber, from the linear discharge channels 52A-52D through the discharge passages 53, 54, the common discharge passage 55, and the discharge pipe 56.

As shown in Figs. 1, 3 and 4, the displacement portion 31-34 serve to keep a distance between the end surfaces of the movable member 3 and the stationary member 2 to be relatively small, while preventing the movable member 3 from coming into contact with the stationary member 2, and are formed into a bar-shape with rectangular section. These displacement portion 31-34 are fixed to the ends of the boards 35-38 in the directions D1, D2 using bolts 60, and are displaceable by actuators 61 in the thickness direction of the boards 35-38.

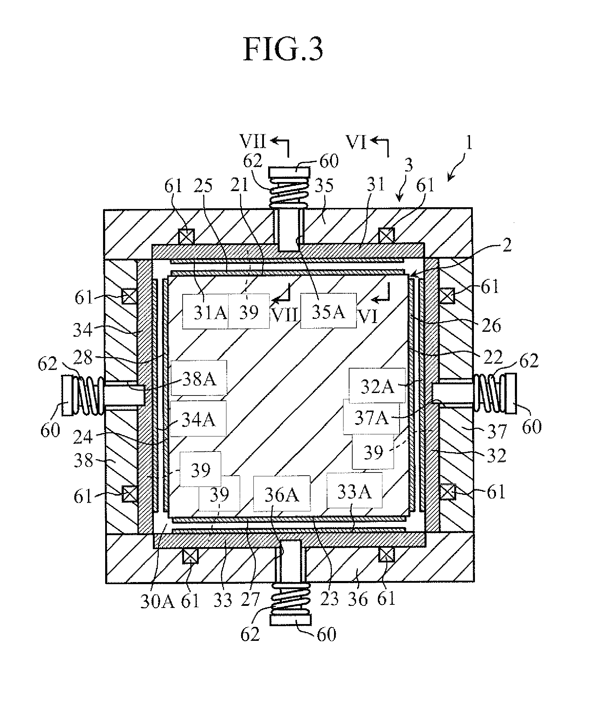

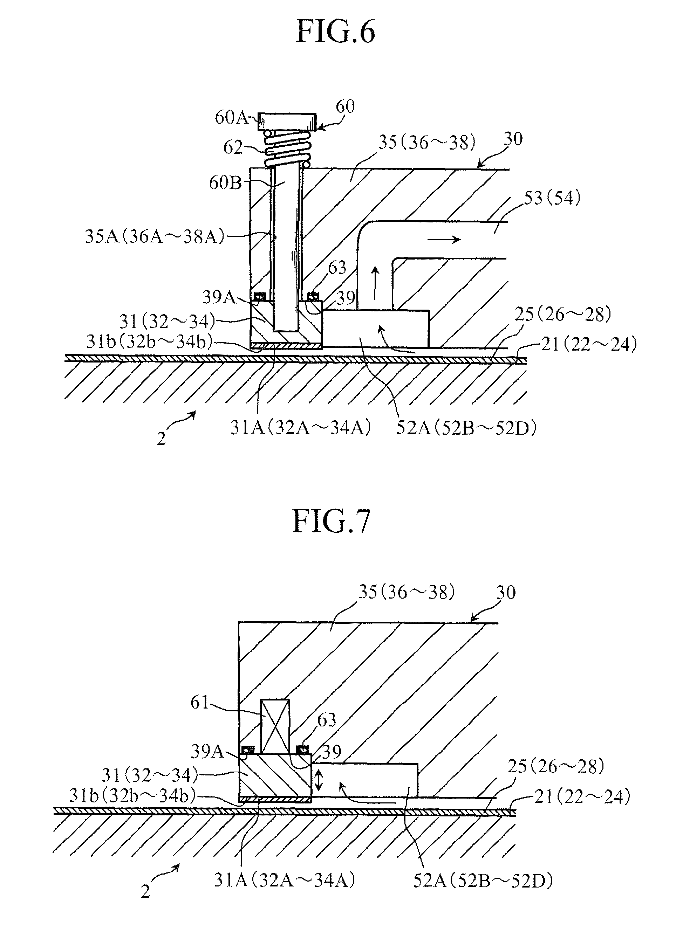

As shown in Figs. 3 and 5-7, the displacement portion 31-34 are accommodated in recesses 39 formed at the ends of the boards 35-38, adjacent to the linear discharge channels 52A-52D, while being fixed to the boards 35-38 by the bolts 60. In this state, as shown in Figs. 6 and 7, the displacement portion 31-34 positioned adjacent to the linear discharge channels 52A-52D protrude beyond the body 30 of the movable member 3 slightly (by about 1-10µm), and include bottom end surfaces 31b, 32b, 33b, 34b facing substantially parallel to the guiding surfaces 21-24 (the surfaces of the first conductor layers 25-28) of the stationary member 2, substantially parallel thereto. With such structure of the displacement portion 31-34 protruding beyond the body 30 of the movable member 3, the pressurized fluid is prevented from leaking out of the movable member 3, and properly guided to the linear discharge channels 52A-52D. If the linear discharge channels 52A-52D are positioned at the middle portion of the body 30 of the movable member 3, the displacement portion 31-34 may be also positioned in the vicinity of the linear discharge channels 52A-52D, preferably positioned adjacent to, and nearer the ends of the body than, the linear discharge channels 52A-52D.

Each of the bolts 60 includes a head 60A, a coil spring 62 positioned between the head and each of the boards 35-38, and a screw 60B inserted in each of through holes 35A, 36A, 37A, 38A of the boards 35-38. The coil spring 62 is compressed from the natural state. Each of the through holes 35A-38A has a diameter larger than that of the screw 60B of the bolt 60. Thus, the displacement portion 31-34 are applied toward the head 60A due to the bias of the coil spring 62, and are displaceable in the thickness direction of the boards 35-38.

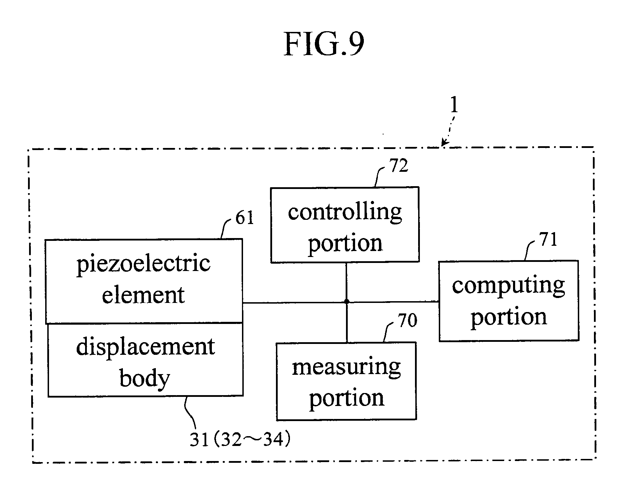

As shown in Figs 3 and 7, the displacement portion 31-34 are displaced in the thickness direction of the boards 35-38 by the actuators 61 provided at the boards 35-38. Two actuators 61 are provided for each of the displacement portion 31-34. These actuators 61 apply loads to each of the displacement portion 31-34 at the ends in the longitudinal direction. The actuators 61 include piezoelectric elements, and by expanding and contracting under control of a controlling means 72 (see Fig. 9) which is to be described below, apply loads to the displacement portion 31-34 so that the displacement portion 31-34 are displaced relative to the boards 35-38.

The actuators 61 may include various known materials such as super-magnetostrictive elements, and electromagnets, other than piezoelectric elements.

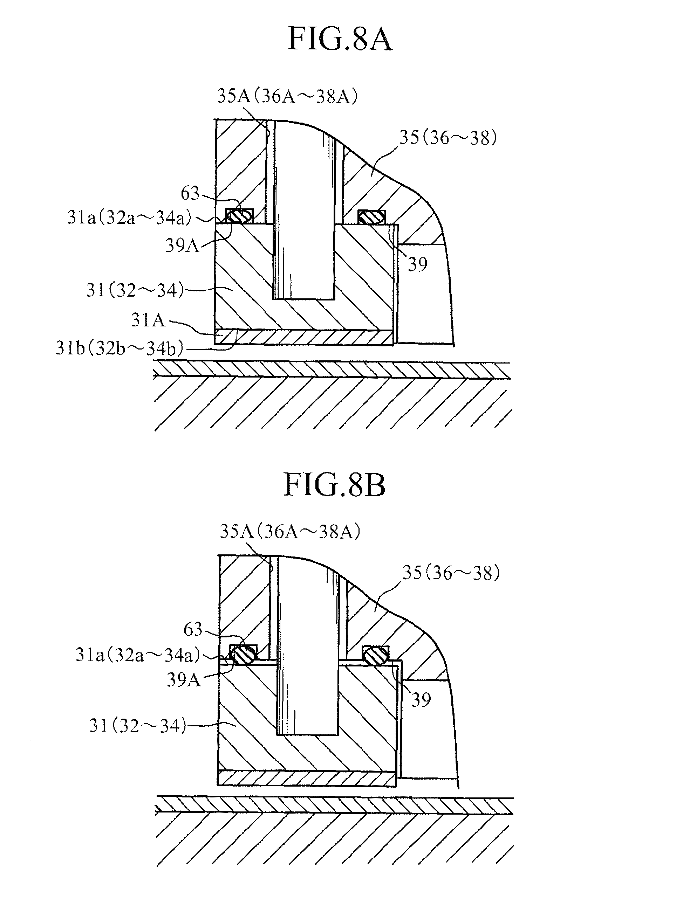

As shown in Figs. 6-8, packings 63 are provided as sealing members between the displacement portion 31-34 and the body 30. Though not shown specifically, each of the packings 63 is rectangular as seen in plan view, and has a circular section. The packings 63 are made of an elastic material such as rubber, and are accommodated in circular grooves 39A formed in the recesses 39 of the boards 35-38. The circular grooves 39A face top end surfaces 31a, 32a, 33a, 34a of the displacement portion 31-34 and extend along the top end surfaces 31a-34a of the displacement portion 31-34. The packings 63 accommodated in the circular grooves 39A are positioned between the boards 35-38 (the circular grooves 39A) and the top end surfaces 31a-34a of the displacement portion 31-34 in a contacting manner. In this state, the packings 63 surround the edges of the through holes 35A-38A of the boards 35-38. With such structure, as shown in Figs. 8A and 8B, when the displacement portion 31-34 are displaced, the packings 63 expand and contract by their elasticity according to the displacement of the displacement portion 31-34, thereby sealing gaps generated between the boards 35-38 and the displacement portion 31-34. As a result, the pressurized fluid is prevented from leaking outside of the vacuum air slider 1 through the gaps between the boards 35-38 and the top end surfaces 31a-34a of the displacement portion 31-34. Further, the pressurized fluid is also prevented from leaking outside of the vacuum air slider 1 through the through holes 35A-38A of the boards 35-38.

Of course, the sealing member may be provided by an elastic material other than the rectangular packings 63.

As shown in Figs 3, 4, 6, and 7, the bottom end surfaces 31b, 32b, 33b, 34b of the displacement portion 31-34 are respectively provided with second conductor layers 31A, 32A, 33A, 34A facing the first conductor layers 25-28 of the stationary member 2. The second conductor layers 31A-34A are used, together with the first conductor layers 25-28, for measuring a distance between the end surfaces of the movable member 3 and the stationary member 2, and compose a measuring means 70 (see Fig. 9) which is to be described below. Each of the second conductor layers 31A-34A is rectangular as seen in plan view, and has a length the same as the width of the first conductor layers 25-28 of the stationary member 2, and a width the same as the width of the displacement portion 31-34.

The first conductor layers 25-28 and the second conductor layers 31A-34A of the stationary member 2 and the displacement portion 31-34 preferably have smooth surfaces with a surface roughness where the maximum height Rz is not more than 1µm, for example. When the first conductor layers 25-28 and the second conductor layers 31A-34A have smooth surfaces, comparing to the case in which the first conductor layers 25-28 and the second conductor layers 31A-34A have rough surfaces, the second conductor layers 31A-34A are more likely to be prevented from getting into contact with the first conductor layers 25-28, or, the end surfaces of the movable member 3 (the displacement portion 31-34) are more likely to be prevented from getting into contact with the stationary member 2. Even if the displacement portion 31-34 come into contact with the stationary member 2, the fact is soon detected. Further, since the distance between the stationary member 2 and the displacement portion 31-34 is kept to be uniform, the pressurized fluid is prevented from leaking outside. In this way, the distance between the stationary member 2 and the movable member 3 for preventing "seizing" is set to be relatively small, and thus the thickness of the fluid layer between the stationary member 2 and the movable member 3 is set to be relatively small.

To have the smooth surfaces, the first conductor layers 25-28 and the second conductor layers 31A-34A may be grinded, or may be formed of a single crystal . Further, the first conductor layers 25-28 and the second conductor layers 31A-34A may be formed to have a relatively large thickness, in order to offset the surface irregularities and holes on the guiding surfaces 21-24 of the stationary member 2 and the bottom end surfaces 31b-34b of the displacement portion 31-34, so that the stationary member 2 and the displacement portion 31-34 have smooth surfaces. For example, when the stationary member 2 and the displacement portion 31-34 are made of a ceramics material, the surface roughness after grinding process has the maximum height Rz of a couple of micrometers to tens of micrometers. In order to efficiently offset the surface irregularities and holes, the thickness of the first conductor layers 25-28 and the second conductor layers 31A-34A is set to not less than 0.1µm and not more than 0.1mm. Here, the surface roughness (i.e. maximum height Rz, arithmetic mean roughness Ra) was measured based on JIS B0601-2001 (conforming to ISO 24287-1997).

Further, the first conductor layers 25-28 and the second conductor layers 31A-34A may be formed as rigid film in order to prevent "seizing" caused by the contact of the layers. By reducing "seizing" caused by the contact of the first conductor layers 25-28 and the second conductor layers 31A-34A, the thickness of the fluid layer provided between the stationary member 2 and the movable member 3 can be further reduced.

The hardness of the first conductor layers 25-28 and the second conductor layers 31A-34A is preferably set to not less than 1200 in Vickers hardness Hv. The rigid film (the conductor layers 25-28, 31A-34A) with such hardness may be made of TiN, TiC, cermet, AlTiC, or WC. Here, the Vickers hardness Hv was measured based on JIS R1610-2003 (conforming to ISO 14705-2000).

Still further, the first conductor layers 25-28 and the second conductor layers 31A-34A may be preferably formed to be non-magnetic. By forming the first conductor layers 25-28 and the second conductor layers 31A-34A to be non-magnetic, when the vacuum air slider 1 is used in devices utilizing charged particles such as an scanning electron microscope (SEM), an electron beam (EB) recorder, and a focus ion beam (FIB) recorder, the charged particle control in such devices is prevented from adverse effect of the first conductor layers 25-28 and the second conductor layers 31A-34A. In this way, the vacuum air slider 1 according to the present invention can be used without problem in the devices utilizing charged particles.

As shown in Fig. 9, the vacuum air slider 1 further includes a measuring means 70, a computing means 71, and a controlling means 72, in addition to the stationary member 2 and the movable member 3.

The measuring means 70 is composed of the first conductor layers 25-28 and the second conductor layers 31A-34A of the stationary member 2 and the movable member 3, and of an AC power supply (not shown) for applying an electric potential difference across the first conductor layers 25-28 and the second conductor layers 31A-34A. The AC power supply (not shown) of the measuring means 70 applies a high-frequency voltage of 500kHz, 5V across the first conductor layers 25-28 and the second conductor layers 31A-34A, while measuring the capacitance between the first conductor layers 25-28 and the second conductor layers 31A-34A. The capacitance between the first conductor layers 25-28 and the second conductor layers 31A-34A correlates with the distance between the first conductor layers 25-28 and the second conductor layers 31A-34A. Thus, by measuring the capacitance between the first conductor layers 25-28 and the second conductor layers 31A-34A, it is possible to figure out the distance between the first conductor layers 25-28 and the second conductor layers 31A-34A, or the distance between the bottom end surfaces 31b-34b of the displacement portion 31-34 and the guiding surfaces 21-24 of the stationary member 2.

The computing means 71 calculates the amount of displacement of the displacement portion 31-34, based on the capacitance measured by the measuring means 70. Specifically, if the distance between the first conductor layers 25-28 and the second conductor layers 31A-34A (or the distance between the bottom end surfaces 31b-34b of the displacement portion 31-34 and the guiding surfaces 21-24 of the stationary member 2) deviates from the reference value, the displacement amount is calculated according to the deviating value. More specifically, the computing means 71 calculates the control input to be inputted to the actuators (piezoelectric element) 61, based on the displacement amount (deviating value) that is necessary for correcting the distance, between the first conductor layers 25-28 and the second conductor layers 31A-34A, to be the reference value. For example, when piezoelectric elements are used for the actuators 61 for moving the displacement portion 31-34, the computing means 71 calculates the voltage value to be applied to the piezoelectric elements for expanding and contracting (deforming) the piezoelectric elements, according to the displacement amount.

The computing means 71 may be omitted by providing the measuring means 70 with the function of the computing means 71.

The controlling means 72 displaces the displacement portion 31-34 according to the control input calculated by the computing means 71. For example, when piezoelectric elements are used for the actuators 61, controlled voltage is applied to the piezoelectric elements for expanding and contracting the piezoelectric elements, thereby displacing the displacement elements 31-34.

The above-described computing means 71 and the controlling means 72 may include CPU, RAM, and ROM, wherein the program stored in the ROM is used in the RAM while executed by the CPU. The computing means 71 and the controlling means 72 may be individually provided for each of the displacement portion 31-34, or only one set of the computing means 71 and the controlling means 72 may be provided for the whole displacement portion 31-34. Further, the computing means 71 may be individually provided for each of the displacement portion 31-34 and only one controlling means 72 may be provided for the whole displacement portion 31-34. The computing means 71 and the controlling means 72 may be provided separately from the vacuum air slider 1, not within the vacuum air slider 1. For example, the displacement portion 31-34 of the vacuum air slider 1 may be controlled by a computing means and a controlling means of a device in which the vacuum air slider 1 is incorporated.

Next, the operation of the vacuum air slider 1 will be described. In the following description, piezoelectric elements are used as the actuators for displacing the displacement portion 31-34.

In the vacuum air slider 1, the movable member 3 is moved relative to the stationary member 2 by a non-illustrated actuator, for example. Here, the fluid layer is provided between the movable member 3 and the stationary member 2.

The fluid layer is provided using a non-illustrated pump, by supplying a pressurized fluid from the air pads 40A-40D, through the supply pipe 42, the circular supply passage 43, and the supply tubes 41A-41D. In turn, the pressurized fluid is discharged out of the vacuum chamber (not shown), through the circular discharge channels 50A-50D, 51A-51D formed at the boards 35-38, and a non-illustrated discharge pipe. Some of the pressurized fluid is not discharged from the circular discharge channels 50A-50D, 51A-51D, but from the linear discharge channels 52A-52D formed at the boards 35-38. The pressurized fluid guided to the circular discharge channel (composed of the linear discharge channels 52A-52D) is sucked by the vacuum pump (not shown) provided outside of the vacuum chamber and discharge out thereof, through the discharge passages 53, 54, the common discharge passage 55, and the discharge pipe 56.

In the measuring means 70, a capacitance between the first conductor layers 25-28 of the stationary member 2 and the second conductor layers 31A-34A of the movable member 3 is measured to figure out the actual distance between the stationary member 2 and the movable member 3.

In the computing means 71, based on the capacitance measured by the measuring means 70, a deviation of the distance, between first conductor layers 25-28 and the second conductor layers 31A-34A (or between the bottom end surfaces 31b-34b of the displacement portion 31-34 and the guiding surfaces 21-24 of the stationary member 2), from the reference value is calculated, and then the control input is calculated according to the deviating value. The calculation result is utilized by the controlling means 72 as a displacement amount of the displacement portion 31-34. In other words, the computing means 71 calculates the control input as a voltage value, and the controlling means 72 controls the AC power supply (not shown) of the measuring means 70 to apply the computed voltage value for expending and contracting the piezoelectric elements 61.

For example, when the distance between the first conductor layers 25-28 and the second conductor layers 31A-34A is smaller than the reference value, or the displacement portion 31-34 (the end surfaces of the movable member 3) get too close to the stationary member 2, the voltage value applied to the piezoelectric elements 61 is reduced for contraction of the piezoelectric elements 61, so that the displacement portion 31-34 are displaced apart from the stationary member 2. On the other hand, when the distance between the first conductor layers 25-28 and the second conductor layers 31A-34A is larger than the reference value, or the displacement portion 31-34 (the end surfaces of the movable member 3) get too apart from the stationary member 2, the voltage value applied to the piezoelectric elements 61 is increased for expansion of the piezoelectric elements 61, so that the displacement portion 31-34 are displaced toward the stationary member 2.

In the vacuum air slider 1, since the actual distance between the stationary member 2 and the end surfaces of the movable member 3 (the displacement portion 31-34) is measured at the facing portion of these members, the distance between the stationary member 2 and the end surfaces of the movable member 3 (the displacement portion 31-34) is accurately measured. In this way, the measurement accuracy is remarkably improved, comparing with a method in which the distance between of the stationary member 2 and the end surfaces of the movable member 3 (the displacement portion 31-34) is indirectly measured at a portion other than the facing portion of the members.

By displacing the end surfaces of the movable member 3 (the displacement portion 31-34) according to the accurately measured distance, the distance between the stationary member 2 and the movable member 3 can be kept very small, and the movable member 3 is prevented from getting too close to the stationary member 2. Since the movable member 3 is prevented from getting into contact with the stationary member 2, "seizing" due to the contact of the movable member 3 to the stationary member 2 is also prevented. Especially, by urging the displacement portion 31-34 in the direction away from the stationary member 2, the displacement portion 31-34 can be responsively retracted from the stationary member 2. Therefore, the distance between the stationary member 2 and the movable member 3 for preventing "seizing" can be reduced, and thus the thickness of the fluid layer provided between the stationary member 2 and the movable member 3 can also be reduced. As a result, in the vacuum air slider 1, the posture stability of the movable member 3 relative to the stationary member 2 is enhanced, and the amount of the pressurized fluid to be supplied between the stationary member 2 and the movable member 3 is reduced. By reducing the amount of the pressurized fluid, the pressurized fluid is prevented from leaking outside of the vacuum air slider 1. Thus, the vacuum pump for discharging the pressurized fluid from the vacuum air slider 1 needs reduced exhaust velocity and electrical power. As a result, the cost for discharging the pressurized fluid can be reduced. Further, by preventing leaking of the pressurized fluid from the static pressure slider, the loss of vacuum in the vacuum chamber (not shown) is prevented, thereby reducing the exhaust velocity and electrical power necessary for maintaining the degree of vacuum in the vacuum chamber. Thus, the running cost of the static pressure slider is reduced also in this point.

Even if the movable member 3 gets into contact with the stationary member 2, according to the capacitance measured by the measuring means 70, the contact of the movable member 3 to the stationary member 2 is immediately detected. As described above, the displacement portion 31-34 are applied in the direction apart from the stationary member 2. With such structure, the displacement portion 31-34 are retracted by the controlling means 72, so that the problem due to the contact is held to the minimum.

Meanwhile, the distance between the stationary member 2 and the movable member 3 is maintained properly, unnecessarily large gap is not formed between the stationary member 2 and the movable member 3, thereby preventing the pressurized fluid from leaking outside of the vacuum air slider 1. This contributes to reduction in the cost for discharging the pressurized fluid out of the vacuum air slider 1, and for maintaining the vacuum in the vacuum chamber (not shown).

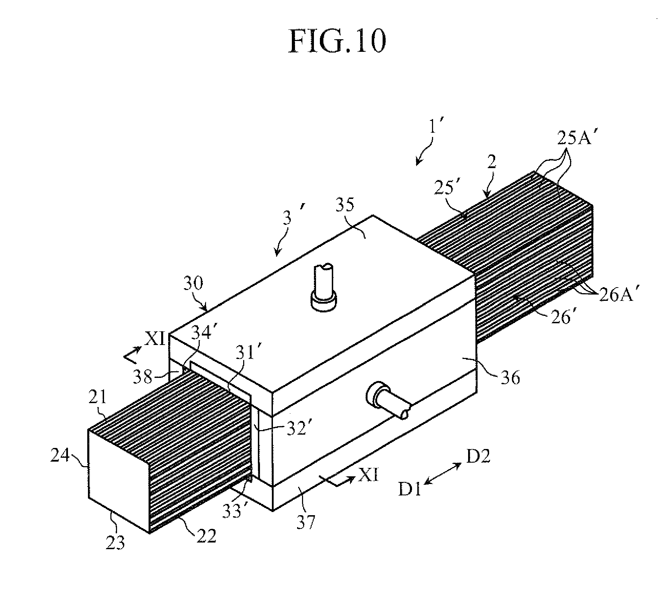

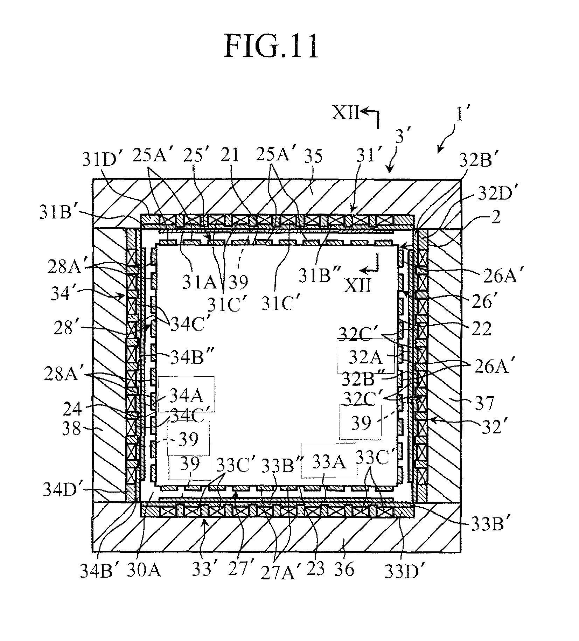

Next, a second embodiment according to the present invention will be described below with reference to Figs. 10-13. In these drawings, elements identical to those in the first embodiment, described already with reference to Figs. 1-9, are given the same reference numbers and duplicated description will be omitted.

The vacuum air slider 1' illustrated in Figs. 10-13 includes displacement portion 31', 32', 33', 34' and first conductor layers 25', 26', 27', 28' which are different from those of the above-described static pressure slider 1 (see Figs. 1-9).

Each of the displacement portion 31'-34' keeps the distance between the end surfaces of the movable member 3' and the stationary member 2' to be relatively small, while preventing the movable member 3' from getting into contact with the stationary member 2', and includes respective one of deformable members 31B', 32B', 33B', 34B', and a plurality of piezoelectric elements 31C', 32C' 33C, 34C'.

The deformable members 31B'-343' control the distance between the end surfaces of the movable member 3' (the displacement portion 31'-34') and the stationary member 2, and are made of elastically deformable plates. These deformable members 31B'-34B' respectively include a plurality of thick portions 31Ba', 32Ba', 33Ba', 34Ba' to which the piezoelectric elements 31C'-34C' are respectively fixed to, and a plurality of thin portions 31Bb', 32Bb', 33Bb', 34Bb' provided between the adjacent thick portions 31Ba'-34Ba', and have resilient property such as a plate spring. The deformable members 31B'-34B' are fixed to the movable member via bond 31E' such as epoxy resin, at their ends (see Fig. 13). Such deformable member 31B'-34B' may be made of a material having toughness such as zirconia, sapphire, and silicon nitride. The bond 31E' may be provided to the upper and lower surfaces of the piezoelectric elements 31C'-34C', so that the piezoelectric elements 31C'-34C' and the deformable members 31B'-34B', as well as the piezoelectric elements 31C'-34C' and the boards 35-38 are fixed to each other by the bond 31E'.

The piezoelectric elements 31C'-34C' serve to elastically deform the deformable members 31B'-34B', and are fixed to the thick portions 31Ba'-34Ba' of the deformable members 31B'-34B' by a bond such as epoxy resin. In other words, the piezoelectric elements 31C'-34C' are aligned and fixed on the deformable members 31B'-34B'. The piezoelectric elements 31C'-34C' are individually expanded and contracted by a controlling means (see Fig. 9). By individually expanding and contracting the piezoelectric elements 31C'-34C', the reformable members 31B'-34B' are deformed at any desired portion, so that the distance between the end surfaces of the movable member 3' (the displacement portion 31'-34') and the stationary member 2 is adjusted.

The piezoelectric elements 31C'-34C' are surrounded by protect resin members 31D', 32D', 33D', 34D'. Such protect resin members 31D'-34D' may be made of a elastically deformable material such as silicon resin and fluorine resin, which do not prevent the expansion and contraction of the piezoelectric elements 31C'-34C'. By surrounding the piezoelectric elements 31C'-34C' by the protect resin members 31D'-34D', the loss of vacuum is prevented, while the piezoelectric elements 31C'-34C' are protected.

Such displacement portion 31'-34' are fixed to the recesses 39 formed at the ends of the boards 35-38, adjacent to the linear discharge channels 52A-52D, by a bond such as epoxy resin. The displacement portion 31'-34', positioned adjacent to the linear discharge channels 52A-52D, protrude beyond the body 30 of the movable member 3' slightly (by about 1-10µm). In this state, the second conductor layers 31A"-34B" face the guiding surfaces 21-24 (the surfaces of the first conductor layers 25'-28') of the stationary member 2, substantially parallel thereto. With such structure of the displacement portion 31'-34' protruding beyond the body 30 of the movable member 3, the pressurized fluid is prevented from leaking out of the movable member 3, and the pressurized fluid is properly guided to the linear discharge channels 52A-52D. If the linear discharge channels 52A-52D are positioned at the middle portion of the body 30 of the movable member 3, the displacement portion 31'-34' may be also positioned in the vicinity of the linear discharge channels 52A-52D, and preferably positioned adjacent to, and nearer the ends of the body than, the linear discharge channels 52A-52D.

First conductor layers 25'-28' are used to measure the distance between the end surfaces of the movable member 3 (the displacement portion 31'-35') and the stationary member 2, and respectively include a plurality of individual electrodes 25A', 26A', 27A', 28A'. The individual electrodes 25A', 26A', 27A', 28A' are positioned to respectively face the piezoelectric elements 31-C'-34C', and extend in the axial direction of the stationary member 2.

In such vacuum air slider 1', the capacitance between each of the individual electrodes 25A'-28A' and the respective one of the second conductor layers 31A-34A is individually measured. In this way, the actual distance between the stationary member 2 and the movable member 3 is measured at each of the piezoelectric elements 31C'-34C'. Such measured capacitance (distance) is processed in a controlling means (see Fig. 9), so that the piezoelectric elements 31C'-34C' are individually controlled to expand and contract. Since the piezoelectric elements 31C'-34C' are fixed to the thick portions of the deformable members 31B'-34B' which are elastically deformable, the distance to the stationary member 2 is controlled individually at a plurality of portions of each of the displacement portion 31'-34'. As a result, in the vacuum air slider 1', the distance between the displacement portion 31'-34' and the stationary member 2 is delicately adjusted in the direction perpendicular to the moving directions D1, D2 of the movable member 3, whereby the distance in the perpendicular direction is kept to be uniform.

In the vacuum air slider 1', alternatively or additionally to the plurality of individual electrodes 25A'-28A' of the first conductor layers 25'-28', the second conductor layers 31A-34A may include a plurality of individual electrodes.

Further, in the vacuum air slider 1', the deformable members 31B'-34B' may be conductive, to have the function of the second conductor layers 31A-34A. In this case, the deformable members 31B'-34B' are made of a metal such as copper and titanium, or a conductive ceramics material such as silicon carbide, Al₂O₃-TiC (AlTiC: a composite material of alumina and titanium carbide), and cermet, for example.

The static pressure slider according to the present invention is not limited to the above-described embodiments, and may be variously modified. For example, the means for measuring the distance between the stationary member and the movable member is not necessarily incorporated in the slider, if at least capable of measuring the actual distance. The measuring means may be provided separately from the stationary member and the movable member, and a known displacement gauge may be integrally provided to the movable member. Examples of the displacement gauge include a capacitance type displacement gauge, an eddy current displacement gauge, and an optical displacement gauge utilizing an optical method such as optical pickup.

Further, the displacement portion may be omitted and the whole movable member may be displaced relative to the stationary member.

The present invention is not limited to be applied to the above-described static pressure slider, but may also be applied to other types of static pressure sliders. For example, the present invention may be applied to a static pressure slider with a cylindrical stationary member and a tubular movable member, as well as to a simple static pressure slider with a levitated flat movable member.

## Claims

1. A static pressure slider comprising:
a stationary member including a guiding surface; and
a movable member movable relative to the stationary member along the guiding surface, wherein a static pressure fluid layer formed of a pressurized fluid is provided between the stationary member and the guide surface;
wherein the static pressure slider further comprises a measuring means for measuring an actual distance between the guiding surface and an end surface of the movable member facing the guiding surface.

2. The static pressure slider according to claim 1, wherein the measuring means serves to measure a capacitance between the guiding surface and the end surface.

3. The static pressure slider according to claim 2, wherein the measuring means comprises a first conductor layer formed on the guiding surface and a second conductor layer formed on the end surface, the first and second conductor layers being used to measure the capacitance therebetween.

4. The static pressure slider according to claim 3, wherein each of the first and second conductor layers has a smooth surface with the maximum height Rz of not more than 1µm.

5. The static pressure slider according to claim 3, wherein the first and second conductor layers are made of a metal or a single crystal .

6. The static pressure slider according to claim 5, wherein the first and second conductor layers are formed into thick layers using a metal .

7. The static pressure slider according to claim 3, wherein the first and second conductor layers have a thickness of not less than 0.1µm and not more than 0.1mm.

8. The static pressure slider according to claim 3, wherein the first and second conductor layers are made of a non-magnetic material.

9. The static pressure slider according to claim 1, wherein the movable member comprises a body and a displacement portion, the displacement portion being displaceable relative to the body in a direction perpendicular to the moving direction of the movable member, the displacement portion having an end surface which serves as said end surface of the movable member,
wherein the static pressure slider further comprises a controlling means for controlling the position of the displacement portion, so that the distance between the guiding surface and the end surface is changed, based on the measurement result of the measuring means.

10. The static pressure slider according to claim 9, wherein the movable member further comprises a piezoelectric element for moving the displacement portion,
the piezoelectric element being controlled to expand and contract by the controlling means.

11. The static pressure slider according to claim 9, wherein the displacement portion is supported to the body, while being applied in a direction apart from the guiding surface.

12. The static pressure slider according to claim 9, further comprising a sealing member for sealing a gap between the body and the displacement portion.

13. The static pressure slider according to claim 12, wherein the sealing member is compressed by the displacement portion.

14. The static pressure slider according to claim 9, wherein the body comprises a discharge channel for discharging the pressurized fluid outside,
at an end portion adjacent to the discharge channel, the displacement portion being positioned.

15. The static pressure slider according to claim 9, wherein the displacement portion is provided with a plurality of piezoelectric elements aligned in a direction perpendicular to the moving direction of the movable member.

16. The static pressure slider according to claim 15, wherein the displacement portion comprises an elastically deformable member,
the piezoelectric elements being fixed to the deformable member.

17. The static pressure slider according to claim 16, wherein the deformable member comprises a plurality of thick portions to which the piezoelectric elements are fixed, and a plurality of thin portions positioned between the adjacent thick portions.

18. The static pressure slider according to claim 15, wherein the displacement portion further comprises a protect resin member surrounding the piezoelectric elements.

19. The static pressure slider according to claim 15, wherein the measuring means comprises a first conductor layer formed on the guiding surface and a second conductor layer formed on the end surface,
at least one of the first and second conductor layers includes a plurality of individual electrodes corresponding to respective ones of the piezoelectric elements,
the measuring means using the individual electrodes to measure a capacitance between the first and second conductor layers.
